# DEMANDE DE BREVET EUROPEEN

(11) **EP 1 030 332 A1**
(43) Date de publication de la demande: **23.08.2000**
(21) Numéro de dépôt: 00420035.8
(22) Date de dépôt: 17.02.2000
(51) Int. Cl.: H01H 13/58, A47J 37/12

(54) **Dispositif de commande pour un appareil électrique de cuisson**

(30) Priorité: 19.02.1999 FR 9902259
(71) Demandeur: SEB S.A., 69130 Ecully (FR)
(72) Inventeur: Bizard, Jean-Claude, 21121 Fontaine les Dijon (FR)

(57) **Abrégé**

- L'invention concerne un dispositif de commande pour un appareil électrique de cuisson, comportant des éléments présentant des informations et/ou agissant sur des moyens de commande.
- Conformément à l'invention, il comprend
   . une pièce (10) de commande, montée en rotation, portant une série de rampes (14),
   . un bouton de commande (20) monté en translation parallèlement à l'axe de rotation de la pièce rotative (10) à l'encontre d'un moyen élastique (22), entre une position de repos ou il affleure de la face externe du boîtier et une position enfoncée dans le boîtier, portant un tenon ou des rampes interagissant avec la première série de rampes,
   . une seconde série de rampes décalée par rapport à la première série, étant agencée sur la pièce rotative (10),
   . au moins un doigt (32) étant en appui élastique sur la seconde série de rampes, de telle sorte à imprimer une seconde rotation de la pièce rotative lors du retour du bouton en sa position de repos.

## Description

La présente invention concerne le domaine technique général des appareils électriques de cuisson comportant un boîtier et une cuve associée à un élément chauffant, et se rapporte plus particulièrement à un dispositif de commande accessible à l'extérieur de l'appareil pour que l'utilisateur puisse mettre en oeuvre différentes fonctions.

Il est connu de réaliser des friteuses électriques comportant un boîtier formant un logement ouvert vers le haut et prévu pour recevoir une cuve amovible ou non, ainsi qu'un couvercle monté par une charnière au boîtier de telle sorte à pouvoir être refermé par dessus la cuve et retenu par un verrou situé usuellement à l'opposé de la charnière. Un bouton de commande accessible de l'extérieur permet de déclencher le verrou pour ouvrir le couvercle lorsque désiré.

La friteuse comprend en outre des moyens de chauffe disposés au fond dudit logement et des moyens d'ouverture et de fermeture du circuit d'alimentation électrique des moyens de chauffe, tels qu'un interrupteur général marche/arrêt accessible de l'extérieur, ainsi que des moyens de contrôle de la température de la cuve comprenant usuellement un thermostat dont une pièce vient en contact thermique avec la cuve et dont un organe de commande accessible à l'extérieur permet de régler la température de consigne désirée.

Dans les friteuses connues, les dispositifs de commande apparaissent généralement de manière proéminente hors de la face externe du boîtier : soit sous la forme d'un gros bouton rotatif, dont les premiers angles de rotation permettent d'enclencher l'interrupteur général et les angles de rotation suivants permettent de régler la température de consigne du thermostat. En alternative, le moyen de commande peut être constitué d'une réglette se déplaçant à l'intérieur d'une rainure.

Il est notamment connu du document FR 2 387 625 une friteuse électrique comportant un bouton poussoir monté sur une paroi latérale d'un capot. Ce bouton poussoir présente l'inconvénient d'être proéminent par rapport à la surface extérieure de paroi latérale du capot.

De tels dispositifs de commande constituent donc des aspérités importantes sur la face externe du boîtier, rendant celle-ci difficile à nettoyer. Ceci est d'autant plus vrai lorsque des saletés peuvent venir se loger au fond de fentes, creux ou autres cavités.

Par ailleurs, de tels moyens de commande proéminents sont de plus en plus jugés disgracieux par les utilisateurs.

Le but de la présente invention est un dispositif de commande pour un appareil électrique de cuisson, notamment friteuse électrique, comportant un boîtier et une cuve associée à des moyens de chauffe, apte à être réalisé de manière plus discrète tout en restant fiable dans son fonctionnement et économique à réaliser.

Ces buts sont atteints grâce à un dispositif comprenant :
- une pièce montée en rotation, supportant des éléments présentant des informations et/ou comprenant des organes aptes à agir lors d'une rotation sur les moyens d'ouverture et de fermeture et/ou aptes à modifier une position d'un élément de consigne des moyens de contrôle de la température ou de la pression, et/ou aptes à agir au travers d'un mécanisme sur le verrou du couvercle,
- un bouton de commande monté en translation parallèlement à l'axe de rotation de la pièce rotative, et ceci à l'encontre d'un moyen élastique, entre une position de repos où il affleure de la face externe du boîtier et une position enfoncée dans le boîtier,
- une première série de rampes en portion de spirale étant agencée sur la pièce rotative, respectivement sur le bouton, concentriquement à l'axe de rotation de la pièce rotative,
- un tenon ou des crans étant agencés en vis à vis sur le bouton, respectivement sur la pièce rotative, et interagissant avec la première série de rampes, de telle sorte à provoquer une première rotation de la pièce rotative lors de l'enfoncement du bouton de sa position de repos à sa position enfoncée,
- une seconde série de rampes ou de creux étant agencée sur la pièce rotative concentriquement à son axe de rotation et étant décalée par rapport à la première série,
- au moins un doigt étant en appui élastique sur la seconde série de rampes, de telle sorte à imprimer une seconde rotation de la pièce rotative lors du retour du bouton en sa position de repos.

Comme on le comprendra, la seconde rotation permet alors de décaler la position angulaire des tenons ou des crans agencés sur le bouton de commande par rapport à la première série de rampes agencée en vis à vis sur la pièce rotative, de telle sorte qu'un enfoncement ultérieur du bouton de commande implique à nouveau une rotation de la pièce.

Grâce à ce dispositif, on transforme un mouvement d'un bouton de commande accessible de l'extérieur, usuellement mobile en rotation ou en translation dans le plan de la face du boîtier, en un mouvement de translation perpendiculaire à ce plan de boîtier.

Ceci permet alors d'agencer le bouton de commande extérieur de telle sorte qu'au repos, il affleure dans le plan de la face du boîtier pour en créer une continuité.

La face du boîtier est ainsi plus étanche. Elle est aussi plus facile à nettoyer, même quand l'appareil est en fonctionnement.

Le dispositif selon l'invention trouve un intérêt particulier sur une friteuse, car ce type d'appareil dégage des vapeurs relativement grasses qui peuvent retomber sur le boîtier. La facilité de nettoyage apportée par le bouton de commande affleurant la façade est alors appréciable.

Avantageusement, la pièce rotative est une couronne agencée dans une empreinte circulaire d'une platine de support fixée entre la paroi externe et une paroi interne du boîtier.

Si désiré, un ou plusieurs crochets protubérants de la platine sont engagés dans une rainure ou derrière une collerette ménagée sur la couronne à proximité de son bord en contact avec la platine, ces crochets assurant ainsi une rétention en translation de la couronne.

Grâce à cet agencement, on dispose pas moins de deux faces circulaires, une interne et une externe, pour disposer les organes de commande et les séries de rampes ou de creux.

Avantageusement alors, la première série de rampes est réalisée en la face circulaire interne ou externe de la couronne, et les organes aptes à agir sur les moyens d'ouverture / de fermeture du circuit de chauffe, ou aptes à agir sur l'élément de consigne des moyens de contrôle de la température, ou aptes à agir sur le mécanisme d'ouverture du couvercle, sont de préférence agencés sur l'autre face circulaire de la couronne.

On évite ainsi élégamment toute interférence entre d'une part le mécanisme de mise en rotation de la couronne à partir du bouton de commande accessible de l'extérieur, et d'autre part les organes de commande agissant sur les différentes fonctions de la friteuse.

Avantageusement, les moyens d'ouverture et de fermeture du circuit d'alimentation électrique des moyens de chauffe comprennent un ou plusieurs interrupteurs dont les boîtiers sont agencés à proximité de la couronne, de telle sorte que leur bouton d'actionnement, maintenu au repos proéminent hors de leur boîtier par un moyen élastique interne, interagit avec des ergots d'une série répartie régulièrement sur le pourtour de la face circulaire externe de la couronne.

Cet agencement se caractérise par sa simplicité, donc sa fiabilité.

Avantageusement alors, les ergots de la couronne présentent un creux en leur sommet interagissant avec les boutons des interrupteurs, de telle sorte à imprimer, ou à contribuer à imprimer la seconde rotation de la couronne rotative lors du retour du bouton de commande du dispositif, en sa position de repos.

On met ainsi à profit les moyens élastiques présents dans le ou les interrupteurs de marche/arrêt des moyens de chauffe, pour conforter la seconde rotation permettant d'initialiser la rotation ultérieure de la pièce ou de la couronne, lors de l'enfoncement suivant du bouton de commande accessible de l'extérieur.

Avantageusement, le bouton de commande se présente sous la forme d'une calotte convexe vers l'extérieur prolongée d'une portion continue, ou de plusieurs portions, périphériques cylindriques de hauteur correspondant sensiblement à l'épaisseur de la paroi externe du boîtier de l'appareil, le bord interne de la ou des portions périphériques cylindriques étant prolongé par une ou des portions de collerettes radiales venant en contact avec la face interne de la paroi externe du boîtier de l'appareil, lorsque le bouton de commande est en position de repos.

En utilisant une telle calotte, on peut alors facilement agencer le tenon ou les crans orientés parallèlement à l'axe de rotation de la couronne directement sur le pourtour de la calotte, de telle sorte à se retrouver en vis à vis de la première série de rampes agencée sur la couronne rotative. Un tel bouton de commande peut alors facilement être réalisé en grand nombre à faible coût par moulage de matière thermoplastique.

De préférence, la calotte du bouton de commande est prolongée d'un ou plusieurs bras parallèles à l'axe de rotation de la pièce, ces bras traversant des ouvertures ménagées en correspondance dans la platine du support, les extrémités de ces bras présentant des crochets venant en appui contre la face interne de la platine, un ou plusieurs ressorts étant agencés en appui entre la platine et la face interne de la calotte, ces ressorts étant disposés soit autour de l'un des bras, soit contenus dans un tube protubérant de la face interne de la calotte et coulissant dans un tube protubérant en vis à vis de la platine.

Ainsi, le bouton de commande est tenu efficacement en translation à l'encontre de moyens élastiques, ce qui augmente sa fiabilité de fonctionnement.

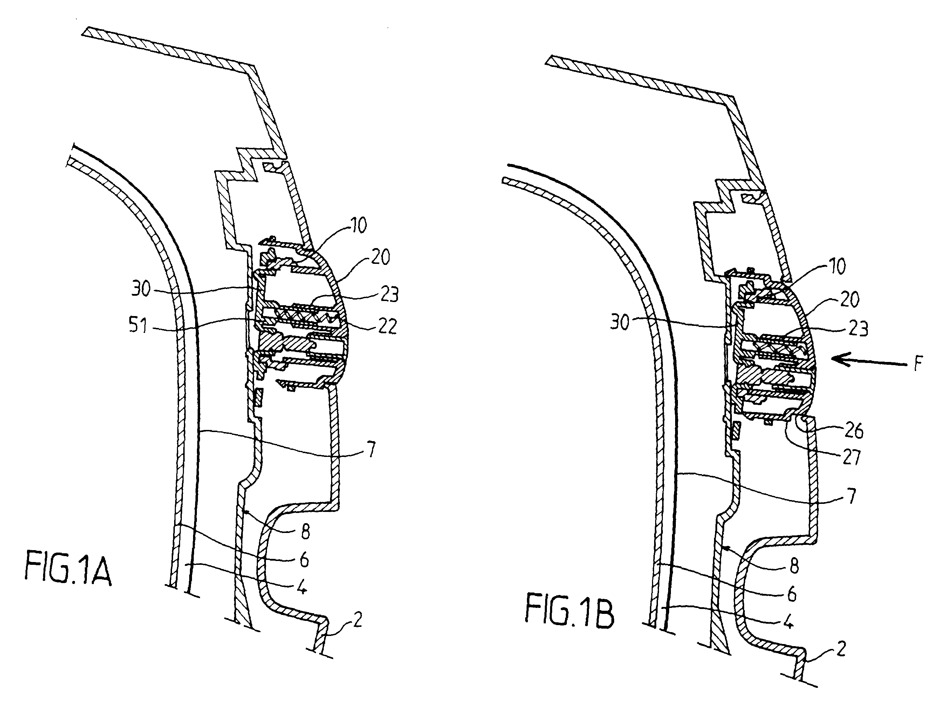

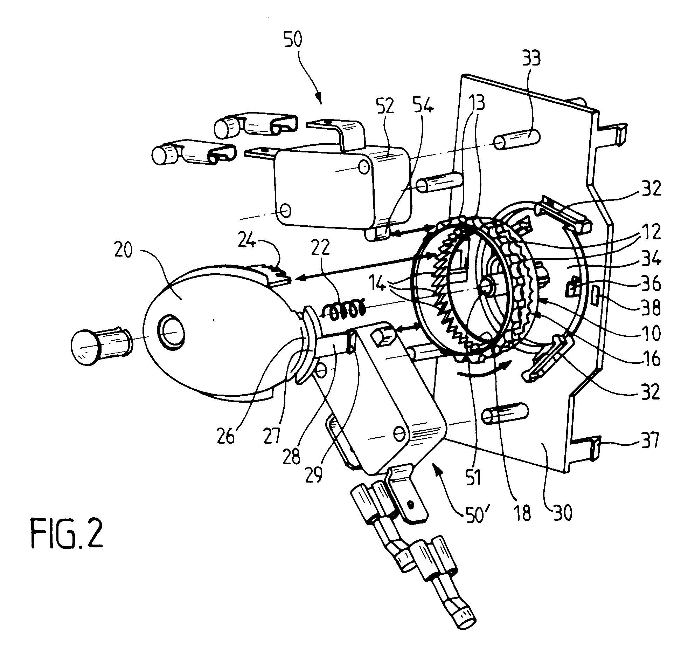

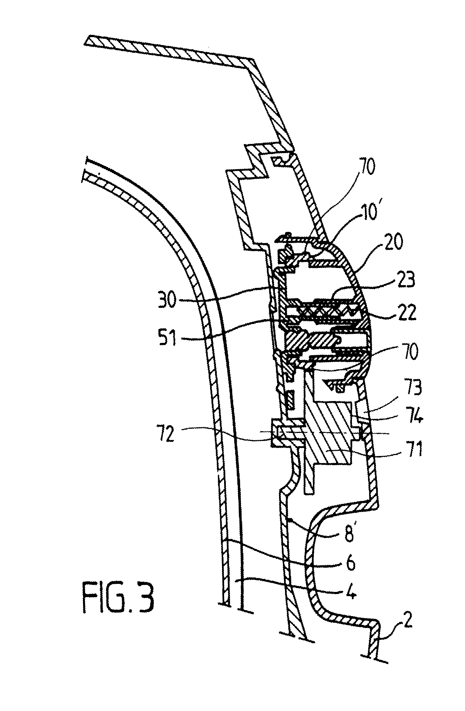

L'invention et ses avantages seront mieux compris à la lecture de la description ci-après, d'un mode de réalisation pris à titre nullement limitatif et illustré dans les figures annexées, dans lesquelles :
. les figures 1a et 1b illustrent une vue en coupe transversale horizontale au travers d'un boîtier de friteuse au niveau du bouton de commande selon l'invention, ce bouton étant respectivement en position de repos et en position enfoncée.
. la figure 2 illustre en perspective éclatée le dispositif selon l'invention
. la figure 3 illustre une variante du dispositif montré à la figure 1a.

Comme mieux visible sur les figures 1a et 1b, la friteuse comprend un boîtier formé d'une paroi externe 2 et d'une paroi interne 8, dans lequel est placée une contre cuve 7 délimitant un logement interne 4 dans lequel est disposée une cuve 6.

Plus particulièrement selon l'invention, et comme bien visible sur la figure 1a, au moins l'un des boutons de commande 20 de la friteuse affleure à la surface externe de la paroi 2 de telle sorte à éviter de créer une aspérité.

Le dispositif incorporant ce bouton apparaît de manière plus détaillée sur la figure 2.

Le dispositif comprend d'abord une platine de support 30 sensiblement plane attachée par des crochets 37 en la paroi interne 8. Cette platine présente une empreinte en creux 34 circulaire sensiblement centrale de profondeur comprise entre 1 et 3 mm et de diamètre compris entre 25 et 50 mm.

En la périphérie externe de cette empreinte sont disposés tangentiellement deux crochets flexibles 32 dont les tenons d'extrémités d'accrochage sont orientés vers le centre de l'empreinte.

Par ailleurs, trois crochets flexibles 36 protubérant perpendiculairement de la platine 30 sont disposés régulièrement le long de la périphérie interne de l'empreinte, ce nombre de crochets pouvant varier de deux à cinq, leur hauteur étant comprise entre 2 et 5 mm.

Le centre de l'empreinte 30 est de plus matérialisé par un tube 51 protubérant d'une hauteur de 10 à 20 mm. Enfin, des tenons de fixation 33 sont ménagés sur la platine autour de l'empreinte 30.

Les ouvertures ménagées dans la platine autour des crochets 32 et 36 montrent comment cette pièce peut être réalisée simplement par moulage de la matière thermoplastique.

Dans l'empreinte 34 est logée une couronne 10 libre en rotation dont le diamètre externe est légèrement inférieur à celui de l'empreinte 34.

Notamment, les crochets 36 viennent s'enclencher dans une rainure ou derrière une collerette 18 ménagée à proximité du bord circulaire de la couronne en contact avec la platine 30. Cet accrochage retient en translation la couronne 10.

Comme bien visible sur la figure 2, une première série de rampes 14 est répartie régulièrement contre la face interne cylindrique de la couronne 10 et ceci peu au dessus de la rainure ou collerette 18. Les faces actives, c'est à dire orientées selon l'axe de rotation de la couronne, constituent de petites portions de spirales identiques, adjacentes. Comme illustré, la série peut présenter entre 30 et 40 rampes dont la hauteur de départ est de l'ordre de 3 mm.

En la face extérieure circulaire de la couronne 10 est ménagée, à proximité du bord en contact avec la platine 30, une seconde série régulière de rampes ou de creux 16, interagissant avec les crochets 32, comme il sera mieux expliqué par la suite. Le nombre de rampes ou de creux 16 est identique à celui de la première série.

Cette face cylindrique externe présente également une série d'ergots d'actionnement 12 identiques régulièrement répartis sur la périphérie et protubérant radialement de la couronne 10. Dans le cas illustré, le nombre d'ergots est la moitié du nombre de rampes de la première série. La hauteur de ces ergots peut être de l'ordre de 3 à 6 mm. Notamment, les sommets des ergots 10 présentent chacun un léger creux 13 en leur sommet. Si désiré, une ou plusieurs séries parallèles adjacentes d'ergots 12 peuvent être ménagées sur cette face cylindrique externe.

En les plots 33 de la platine 30 sont engagés des interrupteurs 50, leur positionnement étant tel que leur bouton d'enclenchement 54 protubérant hors de chacun des boîtiers d'interrupteur 52 interagit avec les ergots d'actionnement 12. Selon les besoins, le bouton 54 de l'un des interrupteurs 50 peut être associé à une première série d'ergots, le bouton de l'autre interrupteur 50' étant associé à la série adjacente d'ergots, qui peut alors être angulairement décalée ou présenter des longueurs de sommets différentes.

Le dispositif de commande est complété par le bouton 20, se présentant sous la forme d'une calotte convexe orientée vers l'extérieur dont l'un des diamètres correspond sensiblement à celui de la couronne 10. Comme mieux visible sur les figures 1a, 1b et 2, la périphérie de cette calotte se poursuit par des portions cylindriques 26 que prolongent des portions de collerettes radiales 27 orientées vers l'extérieur.

Ce bouton 20 présente en outre une paire de bras 28 orientés parallèlement à l'axe de rotation de la couronne 10, et en direction de la platine 30, de telle sorte à traverser des ouvertures 38, ménagées à cet effet dans la platine. L'extrémité de ces bras 28 comprend notamment des crochets 29, prévus pour venir en prise avec la face arrière de la platine 30. Comme illustré, ces bras 28 sont de préférence agencés en l'extrémité de portions de collerettes radiales 27.

Plus particulièrement selon l'invention, ce bouton 20 comprend en outre une ou plusieurs séries de crans 24 sensiblement identiques aux rampes 14, avec lesquelles ils sont orientés en vis à vis.

Un ressort 22, agencé soit à l'intérieur, soit à l'extérieur du tube 51 de la platine 30, prend appui d'une part sur la platine et d'autre part sur la face interne du bouton pour repousser celui-ci vers l'extérieur.

Le dispositif de commande décrit précédemment fonctionne de la manière suivante.

Sur la figure 1a est illustré en coupe le dispositif de commande assemblé et à l'état de repos, dans lequel le ressort 22 repousse vers l'extérieur le bouton 20 qui affleure alors à la face externe de la paroi 2, ses portions de collerette radiales 27 venant en appui contre la face interne de cette paroi 2.

Les boutons 54 des interrupteurs 50 se situent alors entre deux ergots 12 de la couronne 10, faisant que ces interrupteurs sont ouverts et que les moyens de chauffe ne sont pas alimentés.

Si l'utilisateur enfonce le bouton 20 en translation vers l'intérieur de l'appareil tel qu'illustré sur la figure 1b, alors les crans 24 du bouton 20 viennent en contact avec des rampes 14 de la face cylindrique interne de la couronne 10 et, par interaction des rampes l'une contre l'autre, impriment à cette couronne 10, un déplacement en rotation dont l'amplitude est définie par la largeur de ces rampes et crans, en l'occurrence de l'ordre de 10 degrés.

La rotation induite dans la couronne 10 amène un ergot d'actionnement 12 contre le bouton 54, celui-ci s'enfonçant au fur et à mesure qu'il monte sur la rampe constituée par la face latérale dudit ergot. L'interrupteur correspondant 50 est alors enclenché.

Lorsque l'utilisateur relâche le bouton 20, le ressort 22 repousse celui-ci en sa position de repos.

Par contre, les crochets 32 se trouvant alors juste en périphérie d'un creux 16, forcent une rotation complémentaire de la couronne 10, de telle sorte que ces crochets 32 viennent s'enfoncer au fond desdits creux. Ce mouvement de rotation complémentaire est assisté également par les boutons 54 d'interrupteurs 50 tombant au fond des creux ménagés en les sommets des ergots 12.

Cette nouvelle position angulaire de la couronne 10 devient ainsi stable. Surtout, les crans 24 se trouvent maintenant en vis à vis d'une nouvelle série de rampes 14.

Une nouvelle poussée contre le bouton 20 induit alors une deuxième rotation de la couronne 10, faisant que les boutons 54 des interrupteurs 50 tombent alors entre deux ergots, interrompant ainsi la connexion réalisée par ces interrupteurs. Le bouton 20 revient à nouveau en sa position de repos, affleurant en la face externe du boîtier de l'appareil.

Comme on peut aisément le comprendre, on peut ainsi enclencher puis déclencher aisément le circuit de chauffe en appuyant simplement successivement sur le bouton 20, revenant toujours en sa position d'affleurement.

Si l'un des interrupteurs 50 est prévu pour fermer le circuit d'alimentation des moyens de chauffe, on comprendra aisément que l'autre interrupteur 50' peut mettre en circuit ou hors circuit un circuit de régulation thermostatique de température de la cuve.

La figure 3 montre une variante de l'exemple de réalisation précédent, dans laquelle une autre série d'ergots 70 ménagée en la face externe circulaire de la couronne 10' est engrenée avec une roue dentée 71 présentant un axe 72 monté sur la paroi interne 8' du boîtier. Une fenêtre 73 ménagée dans la paroi extérieure 2' du boîtier permet à l'utilisateur de voir les indications portées sur une surface frontale 74 de la roue 71.

A titre de variante, non illustrée aux figures, l'axe de la roue dentée pourrait coopérer par un mécanisme d'engrenage avec un bouton rotatif de réglage de la température de consigne d'un thermostat à température de consigne variable.

A titre de variante, non illustrée aux figures, ladite autre série d'ergots ménagée en la face externe circulaire de la couronne pourrait être engrenée avec des roues dentées appartenant à un mécanisme de déverrouillage du couvercle.

Comme on a pu le constater à la lecture de cet exposé, le dispositif de commande selon l'invention, permet de mettre en oeuvre un bouton de commande accessible de l'extérieur, fonctionnant par translation perpendiculaire à la paroi de l'appareil, de telle sorte que, en position de repos, il reste à niveau avec cette paroi. Cet appareil s'avère donc d'une esthétique particulièrement appréciée et facile à nettoyer. On constatera notamment qu'il n'est pratiquement pas possible que des saletés s'immiscent entre la paroi et le bouton de commande coulissant.

En variante on peut envisager que la couronne 10 porte des graduations et/ou des chiffres tournant derrière une ouverture ménagée sur la face avant du bouton 20, cette ouverture pouvant être obturée par un matériau transparent, la face avant du bouton 20 pouvant également être réalisée en un matériau transparent.

En variante également, le dispositif de commande présenté peut être adapté pour un appareil comportant une cuve dans laquelle règne une pression, tel qu'un cuiseur vapeur ou un cuiseur à riz, le dispositif de commande pouvant être disposé sur le couvercle de l'appareil pour actionner des moyens de contrôle de la pression.

## Revendications

1. Dispositif de commande pour un appareil électrique de cuisson, notamment friteuse électrique, comportant un boîtier (2,8) et une cuve (6) associée à des moyens de chauffe, le dispositif de commande comportant des éléments présentant des informations et/ou agissant sur des moyens d'ouverture et de fermeture (50) du circuit d'alimentation électrique des moyens de chauffe et/ou sur des moyens de contrôle de la température de la cuve ou de la pression dans la cuve fermée par un couvercle et/ou sur un verrou du couvercle, caractérisé en ce qu'il comprend
- une pièce (10), montée en rotation, supportant les éléments présentant une information et/ou et comprenant des organes (12) aptes à agir lors de la rotation sur les moyens d'ouverture et de fermeture (50) et/ou aptes à modifier une position d'un élément de consigne des moyens de contrôle de la température ou de la pression et/ou aptes à agir sur le verrou du couvercle au travers d'un mécanisme,
- un bouton de commande (20) monté en translation parallèlement à l'axe de rotation de la pièce rotative (10) à l'encontre d'un moyen élastique (22), entre une position de repos ou il affleure de la face externe du boîtier (2) et une position enfoncée dans le boîtier,
- une première série de rampes (14) en portion de spirale étant agencée sur la pièce rotative (10), respectivement sur le bouton, concentriquement à l'axe de rotation de la pièce rotative,
- un tenon ou des crans (24) étant agencés en vis à vis sur le bouton (20), respectivement sur la pièce rotative, et interagissant avec la première série de rampes (14), de telle sorte à provoquer une première rotation de la pièce rotative (10) lors de l'enfoncement du bouton (20) de sa position de repos à sa position enfoncée,
- une seconde série de rampes ou de creux (16) étant agencée sur la pièce rotative (10) concentriquement à son axe de rotation et étant décalée par rapport à la première série,
- au moins un doigt (32) étant en appui élastique sur la seconde série de rampes, de telle sorte à imprimer une seconde rotation de la pièce rotative lors du retour du bouton en sa position de repos.

2. Dispositif de commande selon la revendication 1, caractérisé en ce que la pièce rotative est une couronne (10) agencée dans une empreinte circulaire (34) d'une platine de support (30) fixée entre la paroi externe (2) et une paroi interne (8) du boîtier.

3. Dispositif de commande selon la revendication 2, caractérisé en ce que un ou plusieurs crochets (36) protubérants de la platine (30) sont engagés dans une rainure ou derrière une collerette (18) ménagée sur la couronne (10) à proximité de son bord en contact avec la platine.

4. Dispositif de commande selon l'une des revendications précédentes, caractérisé en ce que la première série de rampes (14) est réalisée en la face circulaire interne ou externe de la couronne (10), et les organes (12) aptes à agir sur les moyens d'ouverture / de fermeture du circuit de chauffe, ou aptes à agir sur l'élément de consigne des moyens de contrôle de la température, ou aptes à agir sur le mécanisme d'ouverture du couvercle, sont de préférence agencés sur l'autre face circulaire de la couronne.

5. Dispositif de commande selon l'une des revendications précédentes, caractérisé en ce que les moyens d'ouverture et de fermeture du circuit d'alimentation électrique des moyens de chauffe comprennent un ou plusieurs interrupteurs (50) dont les boîtiers (52) sont agencés à proximité de la couronne (10), de telle sorte que leur bouton d'actionnement (54), maintenu au repos proéminent hors de leur boîtier par un moyen élastique interne, interagit avec des ergots (12) d'une série répartie régulièrement sur le pourtour de la face circulaire externe de la couronne et constituant les organes d'actionnement.

6. Dispositif de commande selon la revendication 5, caractérisé en ce que les ergots (12) de la couronne (10) présentent un creux (13) en leur sommet interagissant avec les boutons (54) des interrupteurs (50).

7. Dispositif de commande selon l'une des revendications précédentes, caractérisé en ce que le bouton de commande (20) se présente sous la forme d'une calotte convexe vers l'extérieur prolongée d'une portion continue, ou de plusieurs portions (26), périphériques cylindriques de hauteur correspondant sensiblement à l'épaisseur de la paroi externe du boîtier de l'appareil, le bord interne de la ou des portions périphériques cylindriques étant prolongé par une ou des portions de collerettes radiales (27) venant en contact avec la face interne de la paroi externe (2) du boîtier de l'appareil, lorsque le bouton de commande est en position de repos.

8. Dispositif de commande selon la revendication 7, caractérisé en ce que la calotte du bouton de commande (20) est prolongée d'un ou plusieurs bras (28) parallèle à l'axe de rotation de la pièce (10), ces bras traversant des ouvertures (38) ménagées en correspondance dans la platine du support (30), les extrémités de ces bras présentant des crochets (29) venant en appui contre la face interne de la platine, un ou plusieurs ressorts (22) étant agencés en appui entre la platine et la face interne de la calotte.

9. Dispositif de commande selon l'une des revendications précédentes, caractérisé en ce que la face avant du bouton de commande (20) présente une ouverture ou une zone transparente en regard d'une zone de la pièce rotative (10).
